# EUROPÄISCHE PATENTSCHRIFT

(11) **EP 1 092 068 B1**
(45) Veröffentlichungstag und Bekanntmachung des Hinweises auf die Patenterteilung: **15.10.2003**
(21) Anmeldenummer: 99938151.0
(22) Anmeldetag: 09.06.1999
(51) Int. Cl.: E04B 2/74, A47B 95/04

(54) **VORRICHTUNG ZUR BEFESTIGUNG VON BAUTEILEN**
DEVICE FOR FIXING COMPONENTS
DISPOSITIF POUR FIXER DES COMPOSANTS

(30) Priorität: 30.06.1998 DE 19829181
(43) Veröffentlichungstag der Anmeldung: 18.04.2001
(73) Patentinhaber: ROBERT BOSCH GMBH, 70442 Stuttgart (DE)
(72) Erfinder: BÜNNIG, Torsten, D-70469 Stuttgart (DE); RAHNFELD, Frank, D-64385 Reichelsheim (DE)
(86) Internationale Anmeldenummer: DE9901690
(87) Internationale Veröffentlichungsnummer: WO00001900

(56) Entgegenhaltungen:
- EP-A- 0 458 488
- GB-A- 2 290 846
- PATENT ABSTRACTS OF JAPAN vol. 1996, no. 06, 28. Juni 1996 (1996-06-28) & JP 08 049326 A (YASUDA KK), 20. Februar 1996 (1996-02-20)

## Beschreibung

### Stand der Technik

Die Erfindung geht aus von einer Vorrichtung zur Befestigung von Bauteilen nach der Gattung des Anspruchs 1. Bisher in der Praxis verwendete Vorrichtungen weisen ein Montageelement auf, das mit Fügeflächen an den zu verbindenden Bauteilen anliegt. Da die Fügeflächen mit Hilfe zum Beispiel von Schrauben mit dem Bauteil verbunden sind, ragen die Schrauben über die Wände der Fügeflächen hinaus, so daß sich ein Benutzer der Vorrichtung verletzen könnte. Aus diesem Grund werden Kappen auf die Montageelemente gesteckt. Die Kappen sind in der Regel aus Kunststoff und haben einen oder mehrere stiftförmige Fortsätze, die in passende Bohrungen in den Montageelementen gesteckt werden, wo sie durch einen Preßsitz halten. Während der Nutzung können die Stifte aufgrund von Materialschwund des Kunststoffes, insbesondere in Verbindung mit starken Vibrationen, aus den Bohrungen rutschen, und die Kappen können von den Montageelementen fallen.

Aus der EP 0 458 488 A1 ist eine Befestigungsvorrichtung für Bauteile bekannt, bei der ein Montageelement Aussparungen aufweist. An einer Kappe ausgebildete Fortsätze umgreifen das Montageelement. Dabei weisen die sich gegenüberliegenden Aussparungen einen größeren Abstand zueinander auf als die Fortsätze. Nachteilig an dieser Lösung ist insbesondere, daß die Toleranzen der Abstände der Formschlußmittel relativ eng zu halten sind, um einen sicheren Halt zu gewährleisten.

Weiterhin sind Abdeckelemente bekannt, die elastische Rastfortsätze aufweisen, die in Aussparungen an einem abzudeckenden Bauteil greifen. Die Rastfortsätze sind, um ihre Elastizität zu erhalten, dünne, längliche Bauteile.

Dies hat jedoch zur Folge, daß sie insbesondere bei häufiger Montage und Demontage der Abdeckelemente leicht abbrechen können.

### Vorteile der Erfindung

Die erfindungsgemäße Vorrichtung zur Befestigung von Bauteilen mit den kennzeichnenden Merkmalen des Hauptanspruchs hat demgegenüber den Vorteil, daß die Kappe an dem Montageelement dauerhaft hält und dennoch leicht zu montieren ist. Außerdem lassen sich Toleranzschwankungen, insbesondere der Kappe leicht ausgleichen.

Durch eine symmetrische Ausbildung des Montageelements und der Kappe ist eine einfache Montage gewährleistet, da keine bestimmte Ausrichtung beachtet werden muß.

Mit Hilfe von Aussparungen zum Lösen der Kappe vom montierten Montageelement ist eine einfache Demontage der Kappe gegeben, ohne daß Teile zerkratzt werden.

Entspricht eine Kontur einer Seitenansicht der Vorrichtung einem Viertelkreis, ergibt sich in vorteilhafter Weise ein großer abgedeckter Raum, der viel Platz für Befestigungsmittel bietet.

Durch die in den Unteransprüchen aufgeführten Maßnahmen und Merkmale sind besondere Weiterbildungen der im Hauptanspruch angegebenen Vorrichtung beschrieben.

### Zeichnung

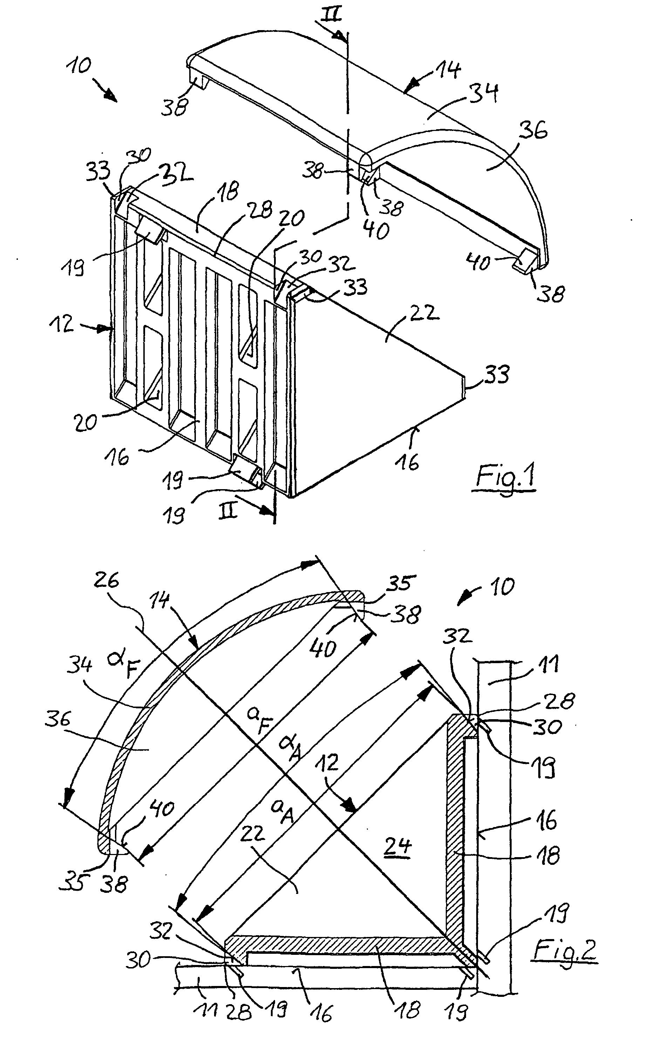

Ein Ausführungsbeispiel der Erfindung ist in der Zeichnung dargestellt und in der nachfolgenden Beschreibung näher erläutert. Es zeigen Figur 1 eine perspektivische Explosionsdarstellung der Vorrichtung und Figur 2 eine Schnittdarstellung gemäß der Schnittlinie II-II in Figur 1.

### Beschreibung des Ausführungsbeispiels

Eine in der Figur 1 gezeigte Vorrichtung 10 dient der Befestigung von Bauteilen 11, insbesondere Profilstäben mit hinterschnittenen Längsnuten, die in der Zeichnung vereinfacht dargestellt sind. Die Vorrichtung 10 besteht aus einem Montageelement 12 in Form eines Profilwinkels, vorzugsweise einem Druckgußteil, das mit den Bauteilen 11 verbindbar ist, und einer Kappe 14, die vorteilhafterweise als Kunststoffspritzgußteil ausgebildet ist.

Das Montageelement 12 weist Fügeflächen 16 für die zu verbindenden Bauteile 11 auf, die an zwei vorzugsweise im rechten Winkel zueinander stehenden Wänden 18 ausgebildet sind. Aus jeder Fügefläche 16 ragen zwei oder mehr Abbrechzungen 19 hervor, die mit hinterschnittenen Längsnuten in Profilstäben in Eingriff bringbar sind und so eine Verdrehsicherung bilden. In jeder Wand 18 sind Durchbrüche 20 zur Hindurchführung von Befestigungselementen für die Bauteile 11, wie zum Beispiel Schrauben, ausgebildet. Ferner sind im vorliegenden Ausführungsbeispiel zwischen den Wänden 18 Stege 22 zur Erhöhung der mechanischen Festigkeit des Montageelements 12 vorhanden. Die Wände 18 und die Stege 22 bilden eine Ausnehmung 24 zu deren Abdeckung die Kappe 14 dient.

Wie aus der Figur 2 hervorgeht, verläuft durch das Montageelement 12 sowie die Kappe 14 eine gemeinsame Ebene 26, die das Montageelement 12 und die Kappe 14 spiegelsymmetrisch teilt. An zwei voneinander weg weisenden Kanten 28 der Fügeflächen 16 sind je Kante 28 zwei Aussparungen 30 ausgebildet. D.h. es sind insgesamt vier Aussparungen 30 vorhanden. Es ist jedoch auch möglich, insgesamt nur zwei Aussparungen 30 oder auch mehr als vier vorzusehen. Die Aussparungen 30, die sich paarweise gegenüberliegen, weisen einen Abstand a_{A} auf, der durch die Ebene 26 halbiert wird. Die Aussparungen 30 weisen weiterhin Montageflächen 32 auf, die einen Winkel α_{A} bilden, der im vorliegenden Ausführungsbeispiel vorteilhafterweise 10° beträgt. Der Winkel α_{A} wird von der Ebene 26 halbiert. Der Abstand a_{A} der Montageflächen 32 verjüngt sich dadurch in Richtung der Fügeflächen 16.

An wenigstens einer, der Kappe 14 zugewandten Stirnseite der Stege 22 des Montageelements 12 ist mindestens eine Aussparung 33 ausgebildet. Im Ausführungsbeispiel sind insgesamt vier Aussparungen 33 vorgesehen.

Zur Abdeckung des Montageelements 12 dient die Kappe 14, die ein bogenförmiges Abdeckteil 34 und zwei seitliche Stege 36 aufweist. Durch diese Ausbildung wird die Kappe 14 elastisch und bleibt dennoch sehr stabil. Das Abdeckteil 34 reicht von der einen, in der Figur 2 mit 28 bezeichneten Kante des Montageelements 12 zur gegenüberliegenden, ebenfalls mit 28 bezeichneten Kante. Die Stege 36 der Kappe 14 fluchten mit den Stegen 22 des Montageelements 12. Dadurch ist die Ausnehmung 24 des Montageelements 12 vollständig abgedeckt. Bei einem Montageelement 12 ohne Stege 22 sind die Stege 36 der Kappe 14 so geformt, daß die Ausnehmung 24 vollständig verschlossen ist. Aus der Figur 2 ergibt sich auch, daß eine Kontur einer Seitenansicht der Vorrichtung 10 im wesentlichen einem Viertelkreis entspricht. Hierdurch ergibt sich in vorteilhafter Weise ein großer abgedeckter Raum, der ausreichend Platz für Befestigungsmittel bietet. Es ist jedoch auch möglich, ein ebenes Abdeckteil 34 vorzusehen, wenn die Befestigungsmittel entsprechend klein sind.

Auf beiden Seiten der bereits angesprochenen Ebene 26 sind an gegenüberliegenden und voneinander weg weisenden Kanten 35 des Abdeckteils 34 zwei Fortsätze 38 ausgebildet. Die Fortsätze 38 sind klein und kompakt ausgebildet, wodurch sie gegenüber dem Abdeckteil 34 biegesteif sind. Insgesamt sollten an der Kappe 14 mindestens zwei Fortsätze 38 angeformt sein, es sind jedoch auch mehr als vier Fortsätze 38 möglich. Die Fortsätze 38, die sich paarweise gegenüberliegen, weisen einen Abstand a_{F} auf. Der Abstand a_{F} wird von der Ebene 26 halbiert. Die Fortsätze 38 sind so ausgebildet, daß sie mit den Aussparungen 30 zusammenwirken. Hierzu ist der Abstand a_{A} der
Aussparungen 30 größer als der Abstand a_{F} der Fortsätze 38. Die Fortsätze 38 haben eine Breite, die so bemessen ist, daß sie mit etwas Spiel in die Aussparungen 30 passen. Die Fortsätze 38 weisen weiterhin Montageflächen 40 auf, die einen Winkel α_{F} bilden, der im vorliegenden Ausführungsbeispiel vorteilhafterweise 20° beträgt. Der Winkel α_{F} wird von der Ebene 26 halbiert. Der Abstand der Montageflächen 40 verjüngt sich dadurch mit zunehmendem Abstand der Montageflächen 40 von der Kappe 14.

Bei der Montage der Kappe 14 auf das bereits an Bauteilen 11 festgeschraubte Montageelement 12 werden beispielsweise zuerst die Fortsätze 38 einer Kante 35 des Abdeckteils 32 der Kappe 14 in die Aussparungen 30 einer Kante 28 des Montageelements 12 gesteckt. Dann wird die Kappe 14 an die Stirnseite der Stege 22 des Montageelements 12 gedrückt. Dadurch biegt sich die Kappe 14 auf, und die Fortsätze 38 der anderen Kante 35 des Abdeckteils 32 der Kappe 14 greifen in die Aussparungen 30 des Montageelements 12 ein. Da der Abstand a_{A} der Montageflächen 32 der Aussparungen 30 größer ist als der Abstand a_{F} der Montageflächen 40 der Fortsätze 38 hält die Kappe 14 formschlüssig am Montageelement 12. Dadurch, daß der Winkel α_{F} der Kappe 14 größer als der Winkel α_{A} des Montageelements 12 ist, gleiten die Montageflächen 40 der Kappe 14 an den Montageflächen 32 des Montageelements 12 entlang, so daß die Kappe 14 an das Montageelement 12 gedrückt wird. Die Kappe 14 umgreift schließlich in fertig montiertem Zustand das Montageelement 12 mit Hilfe der Fortsätze 38. Dadurch ist ein besonders sicherer Halt der Kappe 14 am Montageelement 12 gewährleistet.

Die zwischen dem Montageelement 12 und der Kappe 14 vorgesehenen Aussparungen 33 dienen dem einfachen Lösen der Kappe 14 vom montierten Montageelement 12. Ist das Montageelement 12 an den Bauteilen 11 befestigt und die Kappe 14 auf dem Montageelement 12 angebracht, so ist die Kappe 14 ohne die Aussparungen 33 nur schwierig wieder entfernbar, denn die Fugen zwischen dem Montageelement 12 und der Kappe 14 sind sehr klein und bieten keine Möglichkeit, ein Werkzeug anzusetzen. Auch mit den Fingern läßt sich die Kappe nur schlecht fassen. Bei der Benutzung beispielsweise eines Schraubendrehers kann es auch dazu kommen, daß das Montageelement 12 und/oder die Kappe 14 zerkratzt werden.

Zum Entfernen der Kappe 14 wird die.Spitze eines Schlitzschraubendrehers in eine Aussparung 33 eingeführt, verschwenkt und die Kappe 14 somit vom Montageelement 12 gelöst. Falls es notwendig ist, können auch von jeder Seite jeweils ein Schraubendreher oder eine sonstige geeignete Vorrichtung angesetzt werden. Bei den Aussparungen 33 handelt es sich also um Einrichtungen, die das Demontieren der Kappe 14 wesentlich erleichtern. Die Aussparungen 33 können auch keilförmig ausgebildet sein, so daß ein Schraubendreher nicht verschwenkt werden muß. Alleine durch das allmähliche Einführen des Schraubendrehers hebt dieser die Kappe 14 vom Montageelement 12 ab.

Die Aussparungen 30 müssen nicht unbedingt an Kanten 28 der Fügeflächen 16 ausgebildet sein. Es ist auch möglich, sie an anderen Kanten beispielsweise an denen der Stege 22 vorzusehen. Durch die Ausbildung an Kanten selbst ist es möglich, daß eingreifende Fortsätze 38 möglichst klein gestaltet sind. Erlauben es die konstruktiven Gegebenheiten, so können sie auch an anderen Stellen ausgebildet sein.

Die Fortsätze 38 sind gegenüber der Kappe 14 klein und kompakt, wodurch sie biegesteifer als die Kappe 14 sind und bei der Montage und Demontage nicht verbiegen. Bei der Montage und Demontage verformt sich also nur die Kappe 14 bzw. das Abdeckteil 34 und nicht die Fortsätze 38. Dadurch ist die Gefahr eliminiert, daß die Fortsätze 38 aufgrund der wechselnden Belastung bei häufiger Montage und Demontage abbrechen.

An dieser Stelle sei auf einen weiteren Vorteil der Erfindung hingewiesen. Sowohl das Montageelement 12 als auch die Kappe 14 sind aufgrund ihrer Ausbildung, insbesondere der Ausbildung der Winkel α_{A} der Montageflächen 32 der Aussparungen 30 und der Winkel α_{F} der Montageflächen 40 der Fortsätze 38 in Werkzeugen ohne Schieber herstellbar, wodurch eine preiswerte Herstellung möglich ist.

## Patentansprüche

1. Vorrichtung (10) zur Befestigung von Bauteilen (11), insbesondere Profilstäben, mit einem Montageelement (12), das Fügeflächen (16) für die Bauteile (11) aufweist, und mit einer Kappe (14) zur Abdeckung einer zwischen den Wänden (18) der Fügeflächen (16) bestehenden Ausnehmung (24),
wobei an dem Montageelement (12)
wenigstens zwei gegenüberliegende Aussparungen (30) ausgebildet sind, die einen ersten Abstand a_{A} aufweisen, daß an der Kappe (14) mindestens zwei gegenüberliegende Fortsätze (38) angeformt sind, die einen zweiten Abstand aF aufweisen und die mit den Aussparungen (30) zusammenwirken, wobei der erste Abstand a_{A} der Aussparungen (30) größer ist als der zweite Abstand a_{F} der Fortsätze (38), daß die Kappe (14) elastisch ist und die mindestens zwei Fortsätze (38) gegenüber der Kappe (14) biegesteif sind, und daß die Kappe (14) das Montageelement (12) mit Hilfe der Fortsätze (38) umgreift,
**dadurch gekennzeichnet, daß** die Aussparungen (30) erste Montageflächen (32) aufweisen, zwischen denen ein erster, von einer Ebene (26) halbierter Winkel α_{A} liegt, daß die Fortsätze (38) zweite Montageflächen aufweisen, zwischen denen ein zweiter, von der Ebene (26) halbierter Winkel α_{F} liegt, und daß der zweite Winkel α_{F} größer als der erste Winkel α_{A} ist.

2. Vorrichtung (10) nach Anspruch 1, **dadurch gekennzeichnet, daß** durch die Kappe (14) und das Montageelement (12) mindestens eine Ebene (26) verläuft, die die Kappe (14) und das Montageelement (12) spiegelsymmetrisch teilt.

3. Vorrichtung (10) nach Anspruch 2, **dadurch gekennzeichnet, daß** der Abstand a_{F} der mindestens zwei Fortsätze (38) und der Abstand a_{A} der wenigstens zwei Aussparungen (30) durch die Ebene (26) halbiert wird.

4. Vorrichtung (10) nach einem der Ansprüche 1 bis 3,
**dadurch gekennzeichnet, daß** auf jeder Seite der Ebene (26) zwei Fortsätze (38) und zwei Aussparungen (30) ausgebildet sind.

5. Vorrichtung (10) nach einem der Ansprüche 1 bis 4,
**dadurch gekennzeichnet, daß** die Aussparungen (30) an Kanten (28) des Montageelements (12) ausgebildet sind.

6. Vorrichtung (10) nach einem der Ansprüche 1 bis 5,
**dadurch gekennzeichnet, daß** die Aussparungen (30) an voneinander weg weisenden Kanten (28) der Fügeflächen (16) ausgebildet sind.

7. Vorrichtung (10) nach einem der Ansprüche 1 bis 6,
**dadurch gekennzeichnet, daß** zwischen den Wänden (18) Stege (22) ausgebildet sind.

8. Vorrichtung (10) nach einem der Ansprüche 1 bis 7,
**dadurch gekennzeichnet, daß** zwischen dem Montageelement (12) und der Kappe (14) mindestens eine Aussparung (33) zum Lösen der Kappe (14) vom Montageelement (12) vorgesehen ist.

9. Vorrichtung (10) nach einem der Ansprüche 1 bis 8,
**dadurch gekennzeichnet, daß** eine Kontur einer Seitenansicht der Vorrichtung (10) im wesentlichen einem Viertelkreis entspricht.

## Claims

1. Device (10) for fastening components (11), in particular profile bars, having a mounting element (12) which has joining surfaces (16) for the components (11), and having a cap (14) for covering a recess (24) between the walls (18) of the joining surfaces (16), at least two opposite cutouts (30) being formed on the mounting element (12), these cutouts (30) being at a first distance a_{A} apart, at least two opposite extensions (38) being integrally formed on the cap (14), these extensions (38) being at a second distance a_{F} apart and interacting with the cutouts (30), the first distance a_{A} between the cutouts (30) being greater than the second distance a_{F} between the extensions (38), the cap (14) being elastic and the at least two extensions (38) being flexurally rigid relative to the cap (14), and the cap (14) enclosing the mounting element (12) by means of the extensions (38), **characterized in that** the cutouts (30) have first mounting surfaces (32), between which a first angle α_{A} bisected by a plane (26) lies, **in that** the extensions (38) have second mounting surfaces, between which a second angle α_{F} bisected by the plane (26) lies, and **in that** the second angle α_{F} is greater than the first angle α_{A}.

2. Device (10) according to Claim 1, **characterized in that** at least one plane (26) runs through the cap (14) and the mounting element (12) and divides the cap (14) and the mounting element (12) in a mirror-symmetrical manner.

3. Device (10) according to Claim 2, **characterized in that** the distance a_{F} between the at least two extensions (38) and the distance a_{A} between the at least two cutouts (30) is bisected by the plane (26).

4. Device (10) according to one of Claims 1 to 3, **characterized in that** two extensions (38) and two cutouts (30) are formed on each side of the plane (26).

5. Device (10) according to one of Claims 1 to 4, **characterized in that** the cutouts (30) are formed on edges (28) of the mounting element (12).

6. Device (10) according to one of Claims 1 to 5, **characterized in that** the cutouts (30) are formed on edges (28) of the joining surfaces (16) which point away from one another.

7. Device (10) according to one of Claims 1 to 6, **characterized in that** webs (22) are formed between the walls (18).

8. Device (10) according to one of Claims 1 to 7, **characterized in that** at least one cutout (33) for releasing the cap (14) from the mounting element (12) is provided between the mounting element (12) and the cap (14).

9. Device (10) according to one of Claims 1 to 8, **characterized in that** a contour of a side view of the device (10) corresponds essentially to a quarter of a circle.

## Revendications

1. Dispositif (10) pour fixer des composants (11), en particulier des barres profilées, avec un élément de montage (12), qui présente des surfaces de joint (16) pour les composants (11), et avec un capot (14) pour recouvrir une cavité (24) située entre les parois (18) des surfaces de joint (16), dans lequel sur l'élément de montage (12) sont formés deux évidements (30) l'un en face de l'autre, qui présentent une première distance a_{A}, et sur le capot (14) sont formées au moins deux languettes (38) l'une en face de l'autre, qui présentent une seconde distance a_{F} et qui travaillent en correspondance avec les évidements (30), la première distance a_{A} des évidements (30) étant plus grande que la seconde distance a_{F} des languettes (38), le capot ( 14) étant élastique avec au moins deux languettes (38) rigides à la flexion par rapport au capot ( 14), de sorte que le capot (14) saisit l'élément de montage (12) à l'aide des languettes (38),
**caractérisé en ce que**
les évidements (30) présentent des premières surfaces de montage (32), entre lesquelles il y a un angle a_{A} divisé en deux par un plan (26), que les languettes (38) présentent des secondes surfaces de montage, entre lesquelles il y a un second angle a_{F} divisé en deux par le plan (26), et le second angle a_{F} est plus grand que le premier angle a_{A}.

2. Dispositif selon la revendication 1,
**caractérisé en ce qu'**
à travers le capot (14) et l'élément de montage (12) se trouve au moins un plan (26), qui divise le capot (14) et l'élément de montage (12) en symétrie spéculaire.

3. Dispositif (10) selon la revendication 2,
**caractérisé en ce que**
la distance a_{F} d'au moins deux languettes (38) et la distance a_{A} d'au moins deux évidements (30) sont divisées en deux par le plan (26).

4. Dispositif (10) selon l'une quelconque des revendications 1 à 3,
**caractérisé en ce que**
sur chaque côté du plan (26) deux languettes (38) et deux évidements (30) sont formés.

5. Dispositif (10) selon l'une quelconque des revendications 1 à 4,
**caractérisé en ce que**
les évidements (30) sont formés sur des arêtes (28) de l'élément de montage (12).

6. Dispositif (10) selon l'une quelconque des revendications 1 à 5,
**caractérisé en ce que**
les évidements (30) sont formés sur des arêtes (28) s'écartant l'une de l'autre des surfaces de joint (16).

7. Dispositif (10) selon l'une quelconque des revendications 1 à 6,
**caractérisé en ce que**
des entretoises (22) sont formées entre les parois (18).

8. Dispositif (10) selon l'une quelconque des revendications 1 à 7,
**caractérisé en ce qu'**
entre l'élément de montage (12) et le capot (14), il est prévu au moins un évidement (33) pour détacher le capot (14) de l'élément de montage (12).

9. Dispositif (10) selon l'une quelconque des revendications 1 à 8,
**caractérisé en ce qu'**
un contour d'une vue de côté du dispositif (10) correspond pratiquement à un quart de cercle.
